# EUROPEAN PATENT SPECIFICATION

(11) **EP 2 584 904 B1**
(45) Date of publication and mention of the grant of the patent: **09.01.2019**
(21) Application number: 11724655.3
(22) Date of filing: 14.06.2011
(51) Int. Cl.: A01N 43/707, A01P 7/02, A01N 37/44, A01N 37/02, A01N 57/16, A01N 43/16, A01N 37/52

(54) **METHODS FOR CONTROLLING MITES**
VERFAHREN ZUR BEKÄMPFUNG VON MILBEN
PROCÉDÉS DE LUTTE CONTRE LES ACARIENS

(30) Priority: 25.06.2010 EP 10305682
(43) Date of publication of application: 01.05.2013
(73) Proprietor: Syngenta Participations AG, 4058 Basel (CH)
(72) Inventor: FOUGEROUX, Andre, F-78210 St Cyr L'Ecole (FR)
(74) Representative: Syngenta International AG
(86) International application number: PCT/EP2011/059821
(87) International publication number: WO 2011/160982

(56) References cited:
- EP-A2- 0 314 615
- WO-A1-02/05641
- WO-A1-98/47368
- WO-A1-2006/061164
- WO-A1-2006/111553
- WO-A2-03/045139
- WO-A2-2009/086914
- CH-A5- 685 661
- CH-A5- 689 326
- DE-A1- 19 746 434
- FR-A1- 2 720 230

## Description

The present invention relates to the use of pymetrozine as a miticide, to methods and compositions comprising pymetrozine for the control of bee mites and for the reduction of bee mite infestations, such as the control and reduction of infestations of parasitic bee mites, such as *Varroa destructor* in bee colonies, and to the treatment of varroatosis in bees.

Bee-keeping is an important component of agricultural industry, directly providing honey for the food markets as well as playing a key role in the pollination of other food crops. It has been estimated that honey bee pollination accounts for about one third of US food crops. It has been assessed that the pollination value worldwide is 153bios € (Gallai and al.2008). In 2006 a sharp decline was observed in US honey bee colonies, known as Colony Collapse Disorder (CCD), due to as yet unknown causes, with initial theories focused on pathogens, parasites, environmental stresses and bee management stresses as potential causes. Later research has found a strong correlation between incidences of Israeli acute paralysis virus (IAPV) and CCD (Johnson, Renee; "Recent Honey Bee Colony Declines"; Congressional Research Service Report for Congress; 28 May 2008; Order Code RL33938).

The main species of parasites responsible for problems in honey bees are Varroa mites (*Varroa destructor*) and tracheal mites (*Acarapis woodi*). The former are the most serious and may bring about the destruction of whole colonies. Additionally, the IAPV can be transmitted by the *Varroa* mitewhich could therefore be a contributory factor in CCD. Varroa is also known to transmit other viruses, in particular deformed wing virus (DWV). Current treatment methods for controlling Varroa mites in honey bees include mainly the use of fluvalinate, amitraz, formic acid, coumaphos, thymol and sucrose octanoate. Limitations of current methods include lack of efficacy, generation of resistance, handling difficulties and also contamination of beeswax destined for human use. The disease caused by the Varroa mite is known as varroatosis.

There exists a need therefore for alternative methods of control of bee mites, particularly *Varroa destructor,* preferably having improved efficacy, improved selectivity, lower tendency to generate resistance and generally being less toxic, in particular to bees and beekeepers. Further, methods are needed against Varroa that have built-up resistance with current solutions, such as against pyrethroid-resistant (such as fluvalinate & tau-fluvalinate) Varroa destructor.

Pymetrozine (2,3,4,5-tetrahydro-3-oxo-4-[(pyridin-3-yl)methyleneamino]-6-methyl-1,2,4-triazine) is a member of the pyridine azomethine family of pesticides disclosed in United States patent US 4,931,439 and is registered in the US and other countries for use as an insecticide. It has surprisingly been found that pymetrozine has activity against the *Varroa* mite and is therefore useful as a miticide in the protection of bee colonies.

EP 0 314 615 and CH 685 661 describes certain substituted N-Amino 1,2,4-trazinone compounds and their use in controlling pests. WO 98/47368, DE 19746434, CH 689326, and FR 2720230 describes different mixtures of pymetrozine for controlling pests. WO 2009/086914 describes a method of modulating the release rate of microencapsulated active ingredients. WO 02/05641 describes a composition comprising a combination of a slow-releasing coated solid pesticide and a fast-releasing coated solid pesticide. WO 2006/061164 describes a mat for seeds which comprises a pesticidal active ingredient. WO 03/045139 describes a product comprising a capsule dissolving or disintegrating in the presence of humidity wherein at least a seed and an agrochemical compound that can be released on a controlled basis is located. WO 2006/111553 describes a formulation comprising two components, each of which are microencapsulated.

Accordingly, the present invention provides for pymetrozine for use in:
(i) the control of, or protection against, bee mites in a bee colony;
(ii) the reduction of infestations of bee mites on bees; or
(iii) the treatment of varroatosis.

In a second aspect, the present invention provides a combination comprising (I) pymetrozine, and (II) one or more other agents suitable for use in treating bee mites, wherein the agent is selected from fluvalinate, amitraz, formic acid, coumaphos, thymol and sucrose octanoate.

In a third aspect, the present invention provides a device comprising pymetrozine which releases the pymetrozine into a bee hive to be treated in a controlled manner so as to maintain an effective concentration of the active agent within the hive that is sufficient to kill mites that infest, or may infest, the hive, wherein the device is a strip of material to which the pymetrozine is applied.

In a fourth aspect, the present invention provides The use of pymetrozine for:
(i) the control of, or protection against, bee mites;
(ii) for the reduction of infestations of bee mites around their hives; or
(iii) the protection of bees from attack by mites,
provided the use is not for treatment of the animal body by therapy.

References to pymetrozine herein shall be deemed to include both pymetrozine and agrochemically acceptable salts thereof.

The pymetrozine and compositions thereof of the present invention may be useful against bee mites, including Varroa mites. The pymetrozine and compositions thereof of the present invention are particularly suitable for use against bee mites.

The present invention also encompasses methods for controlling or protecting against bee mites which comprises bringing the mites in their various stages of development into contact with pymetrozine or compositions comprising pymetrozine and optionally other active agents.

The pymetrozine, compositions thereof uses thereof and methods of the present invention are most suitable for use against mites of the genus *Varroa,* such as the species *Varroa destructor* Preferably, the species to be controlled or protected against is *Varroa destructor.*

In another preferred aspect, the present invention provides pymetrozine for use in the treatment of varroatosis. In a preferred embodiment, the present invention provides for the use of a composition comprising pymetrozine and an agrochemically acceptable diluent or carrier for the treatment of varroatosis.

In another preferred aspect, the present invention provides pymetrozine for use in the treatment of varroatosis which comprises bringing the mites in their various stages of development into contact with pymetrozine. In a preferred embodiment, the present invention provides a method for the treatment of varroatosis which comprises bringing the mites in their various stages of development into contact with a composition comprising pymetrozine and an agrochemically acceptable diluent or carrier.

The pymetrozine and compositions thereof of the present invention may be used to treat any bee species affected by parasites such as bumblebees (genus *Bombus*) mason bee (genus Osmia), alfalfa leafcutter bee (genus Megachile) and honeybees (genus *Apis*), with a particular need for the treatment and protection of honey bees.

The pymetrozine and compositions thereof of the present invention may be used in any suitable manner to treat the bees such as directly spraying the bees or treatment of or the area around their hives. The pymetrozine and compositions thereof of the present invention are preferably used for the treatment of honey bees or in or around their hives.

Accordingly, in a preferred aspect, the present invention provides pymetrozine for use in reducing infestations of bee mites in a bee, preferably honey bee, colony. In a preferred embodiment, the present invention provides for the use of a composition comprising pymetrozine and an agrochemically acceptable diluent or carrier for reducing infestations of bee mites in a bee, preferably honey bee, colony.

In another preferred aspect, the present invention provides pymetrozine for use in the control of or protection against bee mites in a bee, preferably honey bee, colony. In a preferred embodiment, the present invention provides for the use of a composition comprising pymetrozine and an agrochemically acceptable diluent or carrier for the control of or protection against bee mites in a bee, preferably honey bee, colony.

In another preferred aspect, the present invention provides pymetrozine for use in the treatment of varroatosis in a bee, preferably honey bee, colony. In a preferred embodiment, the present invention provides for the use of a composition comprising pymetrozine and an agrochemically acceptable diluent or carrier for the treatment of varroatosis in a bee, preferably honey bee, colony.

In another preferred aspect, the present invention provides pymetrozine for use in the treatment of varroatosis in a bee, preferably honey bee, colony which comprises bringing the mites in their various stages of development into contact with pymetrozine. In a preferred embodiment, the present invention provides a method for the treatment of varroatosis in a bee, preferably honey bee, colony which comprises bringing the mites in their various stages of development into contact with a composition comprising pymetrozine and an agrochemically acceptable diluent or carrier.

The pymetrozine of the present invention may be used in unmodified form or, preferably, together with the adjuvants conventionally employed in the art of formulation, and are therefore formulated in known manner e.g. into emulsifiable concentrates, directly sprayable or dilutable solutions, dilute emulsions, wettable powders, soluble powders, dusts, granulates, and also encapsulations in e.g. polymer substances. As with the compositions, the methods of application, such as spraying, atomising, dusting, scattering or pouring, are chosen in accordance with the intended objectives and the prevailing circumstances.

Application of the pymetrozine and compositions of the invention may be performed one or more times, such as two to three times at intervals of 4 to 20 days, preferably at intervals of 1 to 2 weeks, during summertime after the last bee, preferably honey bee, production and before the cells are capped. The pymetrozine or compositions thereof may be applied to the top frame of the hive or applied to strips which are then inserted into the hive.

The rates of application of pymetrozine per hive would depend on a number of factors, such as the population of the hive, application methods and LD0 of pymetrozine against bees. Generally, an effective rate is of 1.1 to 4.4 grams of Al of pymetrozine per hive, preferably 0.55 to 2.2, more preferably 0.7 to 1.5, grams of Al of pymetrozine per hive.

In an additional aspect, the present invention provides a device or composition comprising pymetrozine which releases the active agent into a bee hive to be treated in a controlled manner so as to maintain an effective concentration of the active agent within the hive that is sufficient to kill mites that infest, or may infest, the hive. Preferably the device or composition maintains an effective concentration of active agent for up to 20 days, for example from 1 to 10 days, or 3 to 7 days.

The device or composition preferably maintains the concentration of active agent in the hive below a level that may have a detrimental effect on the bees.

Preferred is a device or composition which maintains an effective concentration of active agent in the hive for up to 20 days, below a level that may have a detrimental effect on the bees.

The formulations, i.e. the compositions, preparations or mixtures containing the pymetrozine and, where appropriate, a solid or liquid adjuvant, are prepared in known manner, e.g. by homogeneously mixing and/or grinding the active ingredients with extenders, e.g. solvents, solid carriers and, where appropriate, surface-active compounds (surfactants).

In an embodiment, the formulation comprising pymetrozine is formulated as a water dispersible granule.

Further, the present invention also make available the compositions, comprising (I) pymetrozine (II) one or more other agents suitable for use in treating bee mites, such as fluvalinate, tau-fluvalinmate, amitraz, formic acid, coumaphos, thymol and sucrose octanoate, and (III) an agrochemically acceptable diluent or carrier.

The present invention accordingly provides pymetrozine for use in the treatment of varroatosis in a bee, preferably honey bee, colony which comprises bringing the mites in their various stages of development into contact with a composition comprising (I) Pymetrozine, (II) one or more other agents suitable for use in treating bee mites, such as fluvalinate, tau-fluvalinmate, amitraz, formic acid, coumaphos, thymol and sucrose octanoate, and (III) an agrochemically acceptable diluent or carrier.

The device according to the invention is a strip of material, such as plastic, to which the active substance is applied.

Suitable solvents are: aromatic hydrocarbons, preferably the fractions containing 8 to 12 carbon atoms, e.g. xylene mixtures or substituted naphthalenes, phthalates, such as dibutyl phthalate or dioctyl phthalate, aliphatic hydrocarbons, such as cyclohexane or paraffins, alcohols and glycols and their ethers and esters, such as ethanol, ethylene glycol, ethylene glycol monomethyl or monoethyl ether, ketones, such as cyclohexanone, strongly polar solvents, such as N-methyl-2-pyrrolidone, dimethyl sulfoxide or dimethylformamide, as well as vegetable oils or epoxidised vegetable oils, such as epoxidised coconut oil or soybean oil; or water.

The solid carriers used e.g. for dusts and dispersible powders are normally natural mineral fillers, such as calcite, talcum, kaolin, montmorillonite or attapulgite. In order to improve the physical properties it is also possible to add highly dispersed silicic acids or highly dispersed absorbent polymers. Suitable granulated adsorptive carriers are porous types, for example pumice, broken brick, sepiolite or bentonite; and suitable nonsorbent carriers are, for example, calcite or sand. In addition, a great number of granulated materials of inorganic or organic nature can be used, e.g. especially dolomite or pulverised plant residues.

Suitable surface-active compounds are non-ionic, cationic and/or anionic surfactants having good emulsifying, dispersing and wetting properties. The term "surfactants" will also be understood as comprising mixtures of surfactants. Both so-called water-soluble soaps and also water-soluble synthetic surface-active compounds are suitable anionic surfactants.

Suitable soaps are the alkali metal salts, alkaline earth metal salts or unsubstituted or substituted ammonium salts of higher fatty acids (C₁₀-C₂₂), e.g. the sodium or potassium salts of oleic or stearic acid, or of natural fatty acid mixtures which can be obtained e.g. from coconut oil or tall oil. Other suitable surfactants that may be mentioned are fatty acid methyltaurin salts and modified and unmodified phospholipids.

More frequently, however, so-called synthetic surfactants are used, especially fatty sulfonates, fatty sulfates, sulfonated benzimidazole derivatives or alkylarylsulfonates. The fatty sulfonates or sulfates are usually in the form of alkali metal salts, alkaline earth metal salts or unsubstituted or substituted ammonium salts and generally contain a C₈-C₂₂ alkyl radical which also includes the alkyl moiety of acyl radicals, e.g. the sodium or calcium salt of lignosulfonic acid, of dodecylsulfate or of a mixture of fatty alcohol sulfates obtained from natural fatty acids. These compounds also comprise the salts of sulfated and sulfonated fatty alcohol/ethylene oxide adducts. The sulfonated benzimidazole derivatives preferably contain 2 sulfonic acid groups and one fatty acid radical containing about 8 to 22 carbon atoms. Examples of alkylarylsulfonates are the sodium, calcium or triethanolamine salts of dodecylbenzenesulfonic acid, dibutylnaphthalenesulfonic acid, or of a condensate of naphthalenesulfonic acid and formaldehyde. Also suitable are corresponding phosphates, e.g. salts of the phosphoric acid ester of an adduct of p-nonylphenol with 4 to 14 moles of ethylene oxide.

Non-ionic surfactants are preferably polyglycol ether derivatives of aliphatic or cycloaliphatic alcohols, saturated or unsaturated fatty acids and alkylphenols, said derivatives containing 3 to 30 glycol ether groups and 8 to 20 carbon atoms in the (aliphatic) hydrocarbon moiety and 6 to 18 carbon atoms in the alkyl moiety of the alkylphenols. Further suitable non-ionic surfactants are the water-soluble adducts of polyethylene oxide with polypropylene glycol, ethylenediaminopolypropylene glycol and alkylpolypropylene glycol containing 1 to 10 carbon atoms in the alkyl chain, which adducts contain 20 to 250 ethylene glycol ether groups and 10 to 100 propylene glycol ether groups. These compounds usually contain 1 to 5 ethylene glycol units per propylene glycol unit.

Representative examples of non-ionic surfactants are nonylphenolpolyethoxyethanols, castor oil polyglycol ethers, polypropylene/polyethylene oxide adducts, **tributylphenoxypolyethoxyethanol, polyethylene glycol** and octylphenoxypolyethoxyethanol. Fatty acid esters of polyoxyethylene sorbitan, e.g. polyoxyethylene sorbitan trioleate, are also suitable non-ionic surfactants.

Cationic surfactants are preferably quaternary ammonium salts which contain, as N-substituent, at least one C₈-C₂₂ alkyl radical and, as further substituents, unsubstituted or halogenated lower alkyl, benzyl or hydroxy-lower alkyl radicals. The salts are preferably in the form of halides, methyl sulfates or ethyl sulfates, e.g. stearyl trimethylammonium chloride or benzyl di(2-chloroethyl)ethylammonium bromide.

The surfactants customarily employed in the art of formulation are described, *inter alia,* in the following publications: "Mc Cutcheon's Detergents and Emulsifiers Annual" MC Publishing Corp., Ridgewood, New Jersey, 1979; Dr. Helmut Stache "Tensid Taschenbuch", Carl Hanser Verlag, Munich/Vienna 1981.

The pesticidal compositions according to the invention usually contain 0.1 to 99%, preferably 0.1 to 95%, of active agent or combinations thereof with other insecticides or acaricides, 1 to 99.9% of a solid or liquid adjuvant, and 0 to 25%, preferably 0.1 to 20%, of a surfactant. Whereas commercial products will preferably be formulated as concentrates, the end user will normally employ dilute formulations containing substantially lower concentrations of active ingredient.

The compositions according to the invention may also contain further additives such as stabilisers, antifoams, viscosity regulators, binders and tackifiers as well as fertilisers or other active ingredients for obtaining special effects.

### FORMULATION EXAMPLES (throughout, percentages are by weight)

| **Example F1:** Solutions | a) | b) | c) | d) |
|---|---|---|---|---|
| active ingredient | 80% | 10% | 5% | 95% |
| ethylene glycol monomethyl ether | 20% | - | - | - |
| polyethylene glycol (mol. wt 400) | - | 70% | - | - |
| N-methyl-2-pyrrolidone | - | 20% | - | - |
| epoxidised coconut oil | - | - | 1% | 5% |
| petroleum fraction (boiling range 160-190.degree.) | - | - | 94% | - |

These solutions are suitable for application in the form of micro-drops.

| **Example F2:** Granules | a) | b) | c) | d) |
|---|---|---|---|---|
| active ingredient | 5% | 10% | 8% | 21% |
| Kaolin | 94% | - | 79% | 54% |
| Highly dispersed silicic acid | 1% | - | 13% | 7% |
| Attapulgite | - | 90% | - | 18% |

The active ingredient is dissolved in dichloromethane, the solution is sprayed onto the carrier, and the solvent is subsequently evaporated off in vacuo.

| **Example F3:** Dusts | a) | b) |
|---|---|---|
| active ingredient | 2% | 5% |
| Highly dispersed silicic acid | 1% | 5% |
| Talcum | 97% | - |
| Kaolin | - | 90% |

Ready-for-use dusts are obtained by intimately mixing the carriers with the active ingredient.

| **Example F4:** Wettable powders | |
|---|---|
| active ingredient | 25% |
| Sodium sulphate | 5% |
| castor oil polyethylene glycol ether (36-37 mol of ethylene oxide) | 10% |
| silicone oil | 1% |
| Agridex | 2% |
| highly dispersed silicic acid | 10% |
| kaolin powder | 37% |
| sulfite spent lye powder | 5% |
| Ultravon W-300% (disodium salt of 1-benzyl-2 heptadecylbenzimidazole-X,X'-disulfonic acid) | 5% |

The active ingredient is mixed with the other formulation components and the mixture is ground in a suitable mill, affording wettable powders which can be diluted with water to give suspensions of the desired concentration.

| **Example F5**: Dusts | a) | b) |
|---|---|---|
| active ingredient | 5% | 8% |
| Talcum | 95% | - |
| Kaolin | - | 92% |

Ready-for-use dusts are obtained by mixing the active ingredient with the carrier and grinding the mixture in a suitable mill.

| **Example F6:** Extruder granules | |
|---|---|
| active ingredient | 10% |
| Sodium lignosulfonate | 2% |
| Carboxymethylcellulose | 1% |
| Kaolin | 87% |

The active ingredient is mixed and ground with the other formulation components, and the mixture is subsequently moistened with water. The moist mixture is extruded and granulated and then the granules are dried in a stream of air.

| **Example F7**: Coated granules | |
|---|---|
| active ingredient | 3% |
| Polyethylene glycol (mol. wt. 200) | 3% |
| Kaolin | 94% |

The finely ground active ingredient is uniformly applied, in a mixer, to the kaolin moistened with polyethylene glycol. Non-dusty coated granules are obtained in this manner.

| **Example F8:** Suspension concentrate | |
|---|---|
| active ingredient | 40% |
| Ethylene glycol | 10% |
| Nonylphenol polyethylene glycol Ether (15 mol of ethylene oxide) | 6% |
| Sodium lignosulfonate | 10% |
| Carboxymethylcellulose | 1% |
| Aqueous formaldehyde solution (37%) | 0.2 % |
| Aqueous silicone oil emulsion (75%) | 0.8 % |
| Water | 32% |

The finely ground active ingredient is intimately mixed with the other formulation components giving a suspension concentrate from which suspensions of any desired concentration can be obtained by dilution with water.

| **Example F9:** Emulsifiable concentrates | a) | b) | c) |
|---|---|---|---|
| active ingredient | 25% | 40% | 50% |
| Calcium dodecylbenzenesulfonate | 5% | 8% | 6% |
| Castor oil polyethylene glycol ether (36 mol of ethylene oxide) | 5% | - | - |
| Tristyrylphenol polyethylene glycol ether (30 mol of ethylene oxide | - | 12% | 4% |
| Cyclohexanone | - | 15% | 20% |
| Xylene mixture | 65% | 25% | 20% |

Emulsions of any desired concentration can be produced from such concentrates by dilution with water.

| **Example F10:** Wettable powders | a) | b) | c) |
|---|---|---|---|
| active ingredient | 25% | 50% | 75% |
| Sodium lignosulfonate | 5% | 5% | - |
| Sodium laurylsulfate | 3% | - | 5% |
| Sodium diisobutylnapthalene-sulfonate | - | 6% | 10% |
| Octylphenol polyethylene glycol ether (7-8 mol of ethylene oxide) | - | 2% | - |
| Highly dispersed silicic acid | 5% | 10% | 10% |
| Kaolin | 62% | 27% | - |

The active ingredient is mixed with the other formulation components and the mixture is ground in a suitable mill, affording wettable powders which can be diluted with water to give suspensions of the desired concentration.

| **Example F11:** Emulsifiable concentrate | |
|---|---|
| active ingredient | 10% |
| Octylphenol polyethylene glycol ether (4-5 mol of ethylene oxide) | 3% |
| Calcium dodecylbenzenesulfonate | 3% |
| Castor oil polyglycol ether (36 mol of ethylene oxide) | 4% |
| Cyclohexanone | 30% |
| Xylene mixture | 50% |

Emulsions of any required concentration can be obtained from this concentrate by dilution with water.

Various aspects and embodiments of the present invention will now be illustrated in more detail by way of example. It will be appreciated that modification of detail may be made with out departing from the scope of the invention.

### BIOLOGICAL EXAMPLES

Varroa mites came from bee colonies provided by a beekeeper. The mite population is kept in a dedicated apiary. For screening needs adults are collected on the same day as the beginning of experiment, either in beehive cells containing brood of worker bees or drones ,or directly on bees emerging during collection.

Bee nymphs needed to feed adults of Varroa mites during experiments are choosen within the frames from which Varroa is also collected. They are collected at the stage of nymph with white or pink coloured eyes according methology described by Rembold et Kremer (Characterization of postembryonic developmental stages of the female castes of the honey bee, Apis mellifera L.. Apidologie 11: 29-38).

3cm diameter Petri dishes were used as confinement material of Varroa mites during experiments. Covers with wire mesh were put on the top of each Petri dish in order to avoid the mites to run away but also to keep favorable humidity for the bee nymph.

Applications were done with a Potter tower (decribed in "An improved apparatus for applying direct sprays and surface films with data on the electrostatic charge on atomize spray fluids." Annal of Applied Biology, 39 : 1-28.). Each active substance was apllied to achieve uniform distribution on the Petri dish (1,5 mg ± 0,2 mg / cm²). A check with distilled water was also tested. Treated Petri dishes were then placed under extractor hood during one our to dry the deposit.

After treatment of Petri dishes, five (5) adults of *V. destructor* collected from the brood were placed in the petri dish. Mites were left in direct contact with the spray deposit during 10minutes, then a bee nymph was collected from brood and placed in each Petri dish. These Petri dishes were kept in hermetic boxes and left in an oven under suitable conditions (35 ± 1,5°C and hygrometry of 50 ± 15 %.). A check was always kept for each experiment. It is designed to correct the obtained mortality in treated petri dishes with natural mortality. During a test 20 Varroa adults are tested for a given compound (4 dishes of 5 individuals).Mortality levels are assessed after 72h (mites which are able to move their legs are considered as alive). Table below illustrates the results from the experiments.

| Active substance | Concentration of formulation | % mortality of Varroa |
|---|---|---|
| pymetrozine | 1 x 10⁻⁻⁴ g | 90 |

## Claims

1. Pymetrozine for use in:
(i) the control of, or protection against, bee mites in a bee colony;
(ii) the reduction of infestations of bee mites on bees; or
(iii) the treatment of varroatosis.

2. Pymetrozine for use according to claim 1 wherein the mites are of the genus *Varroa.*

3. Pymetrozine for use according to either claim 1 or claim 2 wherein the mites are of the species *Varroa destructor.*

4. Pymetrozine for use according to any one of claims 1 to 3 wherein the active agent is used for the treatment of honey bees or in their hives.

5. A combination comprising (I) pymetrozine, and (II) one or more other agents suitable for use in treating bee mites, wherein the agent is selected from fluvalinate, amitraz, formic acid, coumaphos, thymol and sucrose octanoate.

6. A composition comprising a combination according to claim 5, further comprising an agrochemically acceptable diluent or carrier.

7. A device comprising pymetrozine which releases the pymetrozine into a bee hive to be treated in a controlled manner so as to maintain an effective concentration of the active agent within the hive that is sufficient to kill mites that infest, or may infest, the hive, wherein the device is a strip of material to which the pymetrozine is applied.

8. A device according to claim 7, which maintains an effective concentration of pymetrozine in the hive for up to 20 days below a level that may have a detrimental effect on the bees.

9. The use of pymetrozine for:
(i) the control of, or protection against, bee mites;
(ii) for the reduction of infestations of bee mites around their hives; or
(iii) the protection of bees from attack by mites,
provided the use is not for treatment of the animal body by therapy.

## Patentansprüche

1. Pymetrozin für den Gebrauch bei:
(i) der Kontrolle von oder dem Schutz vor Bienenmilben in einem Bienenvolk;
(ii) der Verringerung von Bienenmilbenbefall auf Bienen, oder
(iii) der Behandlung von Varroatose.

2. Pymetrozin für den Gebrauch nach Anspruch 1, wobei die Milben zu der GattungVarroa gehören.

3. Pymetrozin für den Gebrauch entweder nach Anspruch 1 oder nach Anspruch 2, wobei die Milben zu der Spezies *Varroa destructor* gehören.

4. Pymetrozin für den Gebrauch nach einem der Ansprüche 1 bis 3, wobei der Wirkstoff für die Behandlung von Honigbienen oder in ihren Bienenstöcken verwendet wird.

5. Kombination, die (I) Pymetrozin und (II) einen oder mehrere andere Wirkstoffe umfasst, die für den Gebrauch bei der Behandlung von Bienenmilben geeignet sind, wobei der Wirkstoff aus Fluvalinat, Amitraz, Ameisensäure, Coumaphos, Thymol und Saccharoseoctanoat ausgewählt ist.

6. Zusammensetzung, die eine Kombination nach Anspruch 5 umfasst, die ferner einen agrochemisch akzeptablen Verdünner oder Träger umfasst.

7. Vorrichtung, die Pymetrozin umfasst, die das Pymetrozin in einen Bienenstock freisetzt, der auf eine kontrollierte Art behandelt werden soll, um eine effektive Konzentration des Wirkstoffs innerhalb des Bienenstocks aufrecht zu erhalten, die ausreicht, um Milben zu töten, die den Bienenstock befallen oder befallen können, wobei die Vorrichtung ein Streifen aus Material ist, auf den das Pymetrozin aufgebracht ist.

8. Vorrichtung nach Anspruch 7, die eine effektive Konzentration von Pymetrozin in dem Bienenstock für bis zu 20 Tage unter einem Niveau, das eine schädliche Wirkung auf die Bienen haben kann, aufrecht erhält.

9. Gebrauch von Pymetrozin für:
(i) die Kontrolle von oder den Schutz vor Bienenmilben;
(ii) die Verringerung von Bienenmilbenbefall um ihre Bienenstöcke, oder
(iii) den Schutz von Bienen vor Attacken durch Milben,
vorausgesetzt, dass der Gebrauch nicht zur Behandlung des Tierkörpers durch Therapie bestimmt ist.

## Revendications

1. Pymétrozine pour une utilisation dans :
(i) le contrôle de, ou la protection contre, les acariens parasites des abeilles dans une colonie d'abeilles ;
(ii) la réduction des infestations par des acariens parasites des abeilles sur les abeilles ; ou
(iii) le traitement de la varroatose.

2. Pymétrozine pour une utilisation selon la revendication 1, dans laquelle les acariens appartiennent au genre *Varroa.*

3. Pymétrozine pour une utilisation selon la revendication 1 ou bien la revendication 2, dans laquelle les acariens appartiennent à l'espèce *Varroa destructor.*

4. Pymétrozine pour une utilisation selon l'une quelconque des revendications 1 à 3, dans laquelle l'agent actif agent est utilisé pour le traitement d'abeilles mellifères ou dans leurs ruches.

5. Combinaison comprenant (I) de la pymétrozine, et (II) un ou plusieurs autres agents convenables pour une utilisation dans le traitement des acariens parasites des abeilles, dans laquelle l'agent est choisi parmi le fluvalinate, l'amitraz, l'acide formique, le coumaphos, le thymol et l'octanoate de saccharose.

6. Composition comprenant une combinaison selon la revendication 5, comprenant en outre un diluant ou véhicule acceptable sur le plan agrochimique.

7. Dispositif comprenant de la pymétrozine, qui libère la pymétrozine dans une ruche devant être traitée de manière contrôlée afin de maintenir une concentration efficace en agent actif au sein de la ruche qui est suffisante pour tuer des acariens qui infestent, ou peuvent infester, la ruche, où le dispositif est une bandelette de matériau auquel la pymétrozine est appliquée.

8. Dispositif selon la revendication 7, qui maintient une concentration efficace en pymétrozine dans la ruche pour une période allant jusqu'à 20 jours en dessous d'un taux qui peut avoir un effet préjudiciable sur les abeilles.

9. Utilisation de pymétrozine pour :
(i) le contrôle de, ou la protection contre, les acariens parasites des abeilles ;
(ii) la réduction des infestations par des acariens parasites des abeilles autour de leurs ruches ; ou
(iii) la protection des abeilles contre une attaque par des acariens,
à condition que l'utilisation ne soit pas destinée au traitement du corps
animal par thérapie.
